# EUROPEAN PATENT SPECIFICATION

(11) **EP 2 138 434 B1**
(45) Date of publication and mention of the grant of the patent: **30.05.2012**
(21) Application number: 08425455.6
(22) Date of filing: 26.06.2008
(51) Int. Cl.: B65G 47/84, B21D 51/42, B31B 19/84, B65B 61/18

(54) **Gripper and related apparatus for handling objects**
Greifer und entsprechende Vorrichtung zur Handhabung von Objekten
Préhenseur et appareil correspondant pour la manipulation d'objets

(43) Date of publication of application: 30.12.2009
(73) Proprietor: Wild Parma S.r.l., 43044 Collecchio (PR) (IT)
(72) Inventor: Furlotti, Filippo, 43026 Traversetolo (Parma) (IT); Signifredi, Luca, 43045 Fornovo di Taro (Parma) (IT)
(74) Representative: Gotra, Stefano

(56) References cited:
- EP-A- 1 790 593
- DE-U1- 29 901 545
- US-A- 4 059 188
- US-A- 4 262 795

## Description

The present invention relates to a gripper and related apparatus for handling objects.

More specifically, the present invention relates to a gripper for apparatus in the field of filling beverages in flexible containers, in particular apparatus for transferring spouts.

Normally, these flexible containers comprise a "pouch", made of polyethylene (PE), and a "spout" to enable the product contained inside the container to be poured out, usually by squeezing the pouch.

Generally, the assembly of the flexible containers is carried out as following.

The spout is inserted inside a top opening of the pouch, before the filling, and then it is welded to edges positioned at borders of said opening. In particular, the flexible containers are assembled directly on welding starwheels by opening a pouch, inserting the spout inside the opening and then welding the edges of the pouch to the spout.

In order to ensure that a continuous flow of pouches and spouts is fed to the processing starwheel, e.g. a welding starwheel, from document W02006030464 it is known an apparatus for feeding pouches and their respective spouts to a rotary machine for the processing of the same, comprising at least one magazine for the pouches and at least one magazine for the spouts. Such an apparatus comprises a handling unit designed to pick up a pouch and a spout from their respective magazines and feed them simultaneously, and in continuous mode, to the rotary machine that processes them. Said handling unit comprises means for picking up a pouch and means for picking up a spout.

In particular, the means for picking up a spout comprise a plurality of grippers, each of them being fixed on a respective support shaft rotating about a vertical axis.

During the rotation, a roller fixed on each gripper arrives at and hits a standstill cam that forces the roller itself to slide in a groove provided on the gripper, thus actuating a leverism which overcomes the force of a spring holding the gripper's jaws in a closing position. The movement of the leverism enables the opening of the gripper's jaws, both during the picking up step and during the delivery of the spouts to the processing machine, e.g. a welding machine.

The roller is arranged at a definite distance from the vertical axis of the shaft, on an opposite side with respect to the gripper's jaw.

An important drawback of such a kind of gripper is the low accuracy, both during the picking up step and during the delivery step of the spout to the welding machine.

In fact, the strike between the roller and the cam is a dead-beat and therefore the gripper undergoes an angular acceleration around the vertical axis of the support shaft, due to the position of the roller which is far from said vertical axis.

Such an angular acceleration cannot produce an angular velocity because of the presence of the cam and therefore it causes a momentum around the vertical axis. Such a momentum shakes the gripper and thus adversely affects the accuracy both of the picking up step and of the delivery step of the spouts. Another important disadvantage relates to an apparatus provided with such a kind of gripper. In fact, in case of a plant holding, it is impossible opening simultaneously and automatically all the grippers installed on the apparatus, in order to release the spouts already picked up. In fact, the roller of each gripper is not in continuous contact with the cam and therefore there are no means able to activate at anytime the movement of the leverism of each gripper, in order to release the spouts.

Document US 4,059,188 discloses a manually operated four bar linkage on a conveying device permits manual removal of preforms or other workpieces when they have not been ejected from the device at the desired unloading station.

It is an object of the present invention to resolve the above-mentioned drawbacks by providing a gripper able to assure high accuracy, both during the picking up step and during the delivery step of objects, in particular spouts for flexible containers.

A further object of the present invention is to provide an apparatus for handling objects, in particular spouts for flexible containers, able to simultaneously and automatically release all the objects already picked up.

Further still, it is an object of the present invention to present a gripper and related apparatus for handling objects which are easy to construct and reliable. The above aims are fully attained through a gripper and related apparatus for handling objects, according to the present invention and characterized by the contents of the claims reported below.

These and other aims shall become more readily apparent in the following description of a preferred embodiment illustrated, purely by way of non limiting example, in the accompanying drawing tables in which:
- figure 1 is an axonometric view of a gripper according to the present invention, in a first operating position;
- figure 2 is a front view, partially in section, of the gripper illustrated in figure 1;
- figure 3 is a plan view of the gripper illustrated in the preceding figures;
- figure 4 is an axonometric view of the gripper illustrated in the preceding figures, in a second operating position;
- figure 5 is a front view, partially in section, of the gripper illustrated in figure 4, in said second operating position;
- figure 6 is a plan view of the gripper illustrated in figures 4 and 5, in said second operating position;
- figure 7 is an axonometric view of an apparatus for handling objects, according to the present invention;
- figure 8 shows a detail of the apparatus illustrated in figure 7, with the gripper in said first operating position;
- figure 9 shows a further detail of the apparatus illustrated in figure 7, with the gripper in said second operating position;
- figure 10 shows a further embodiment of the apparatus illustrated in figure 7. With particular reference to the figures 1 to 6, a gripper according to the invention is globally indicated by the number 1.

The gripper comprises a bearing shaft 2 and a first and a second jaw 3, 4 pivotally fixed on a substantially horizontal support 5 connected to the shaft. The jaws 3, 4 are faced each other and rotate about respective pivots 3a, 4a in such a way as to mutually departing and approaching, in order to enable the opening and closing of the gripper 1.

The gripper comprises driving means for moving the jaws and actuating means to activate said driving means.

In the example illustrated, the driving means preferably comprise a slider 6 movable on the support 5 and cinematically connected to the jaws 3, 4. In particular, the slider 6 is connected to free ends 3b, 4b of each jaw, at a definite distance from the pivots 3a, 4a and on opposite side with respect to operating portions 3c, 4c suitable for handling objects, in particular spouts 100.

The connection between the slider 6 and the free ends of the jaws are preferably carried out by means of rods 73, 74.

The actuating means are arranged in a position substantially coaxial with the bearing shaft 2.

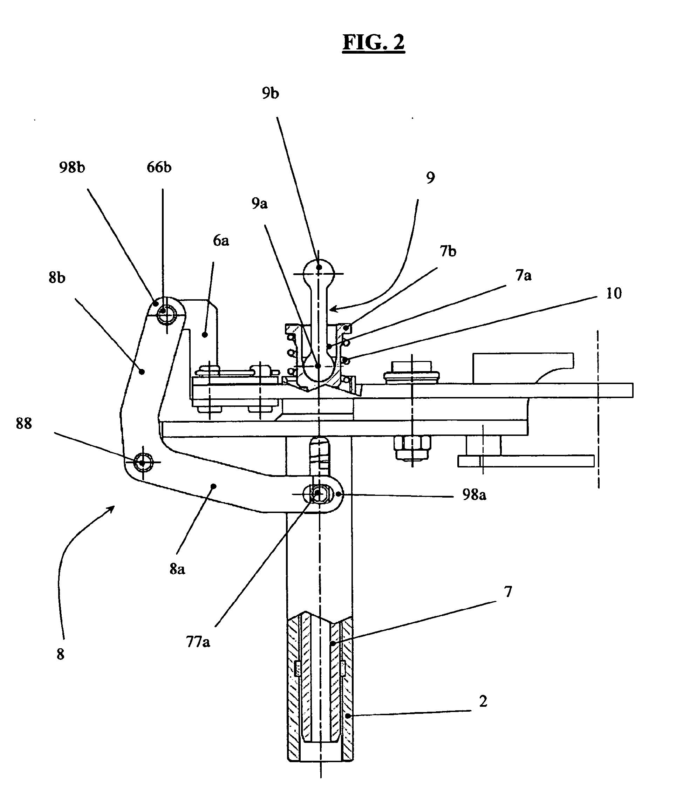

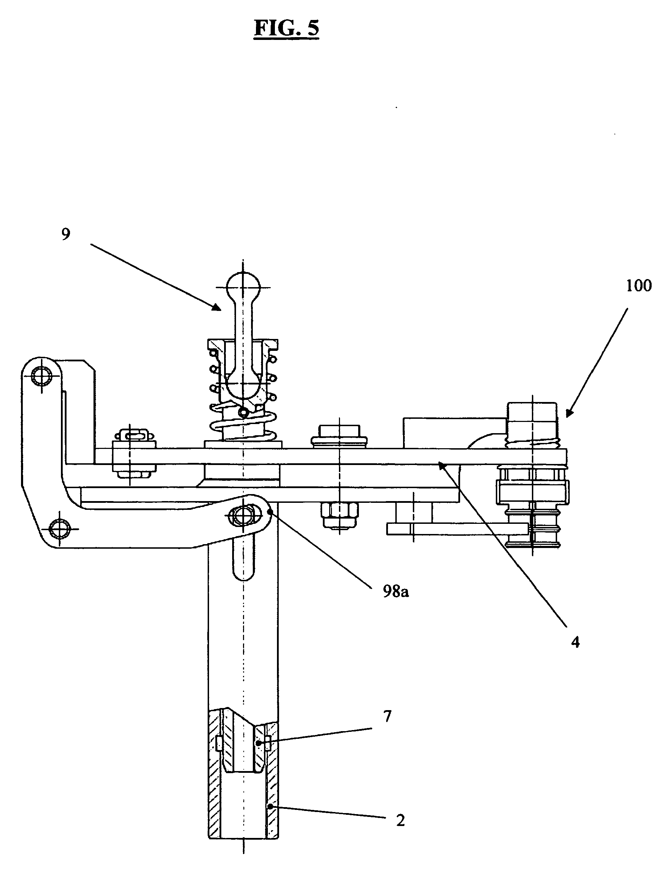

In the example illustrated with particular reference to figures 2 and 5, the actuating means comprise a piston 7 sliding inside the bearing shaft 2 between a first operating position, corresponding to the closing of the gripper, and a second operating position, corresponding to the opening of the gripper. The actuating means further comprise a leverism 8 pivotally mounted on pivots 88 of the support 5 and coupled to the piston 7 and to the slider 6.

In particular, the leverism 8 is a substantially L-shaped element having two lower arms 8a (only one is illustrated in figures 2 and 5) and two upper arms 8b (only one is illustrated in the figures 2 and 5), the ends 98a of the lower arm 8a being coupled to corresponding pivots 77a integral with the piston 7 and the ends 98b of the upper arm 8b being coupled to corresponding pivots 66b integral with a vertical portion 6a of the slider 6.

In the particular embodiment illustrated in the figures, the piston 7 is provided with a top seat 7a for housing, at least partially, a control lever 9. Preferably, the control lever 9 is provided with two expansions, a lower expansion 9a being housed inside the seat 7a and an upper expansion 9b being operatively associable to a roller-cam device.

The piston is further provided with a collar 7b surrounding the top seat 7a and defining a match for the top portion of a spring 10 wound around the piston 7. The match for the lower portion of the spring 10 is provided inside the bearing shaft 2.

The principle of operation of the gripper is as follows.

Starting from the gripper closing position, a substantially vertical force overcoming the force of the spring 10 is exerted on the upper expansion 9b of the control lever 9. Such a force is transmitted to the lower expansion 9a and then to the piston 7 slidably arranged inside the bearing shaft 2.

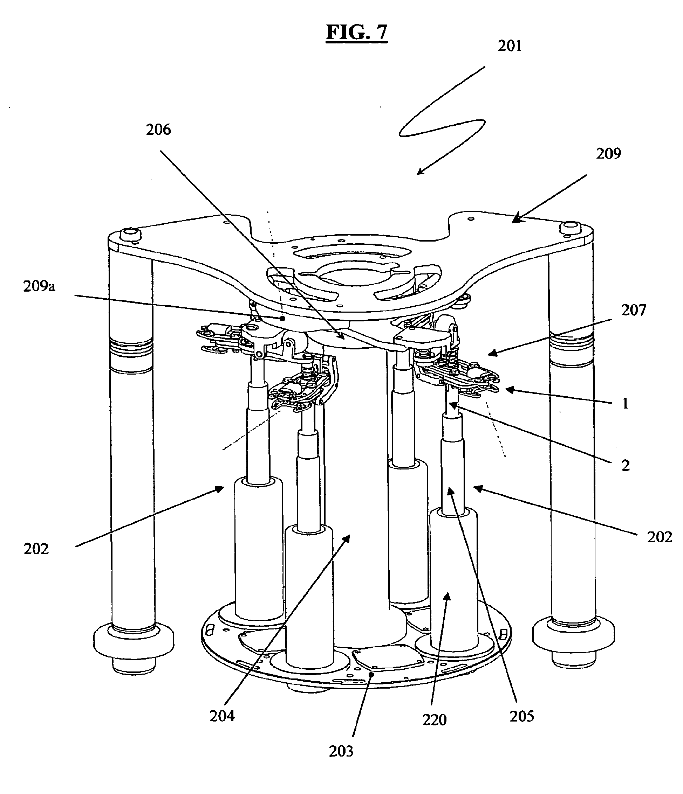

According to the embodiment of the invention shown in figures 7, 8 and 9, the vertical force can be preferably applied by means of a roller-cam device, or by other mechanisms.

Due to the vertical force, the piston 7 undergoes a downwards movement inside the bearing shaft 2, thus pulling down the ends 98a of the lower arms 8a, which are coupled to the pivots 77a integral with the piston 7.

The downwards movement of the ends 98a of the lower arms 8a produces a rotation of the leverism 8 around the pivots 88, whereby causing a corresponding rotation of the upper arms 8b about the pivots 88 and thus a forwards displacement of the ends 98b of the upper arms 8b.

Due to the coaxial arrangement between the piston 7, the bearing shaft 2 and the control lever 9, the gripper does not undergo any angular acceleration around the vertical axis of the bearing shaft and therefore no angular velocity or momentum is produced about such a vertical axis.

The ends 98b are coupled to the vertical portion 6a of the slider 6 and for that reason the latter undergoes the same forwards displacement, sliding on the support 5.

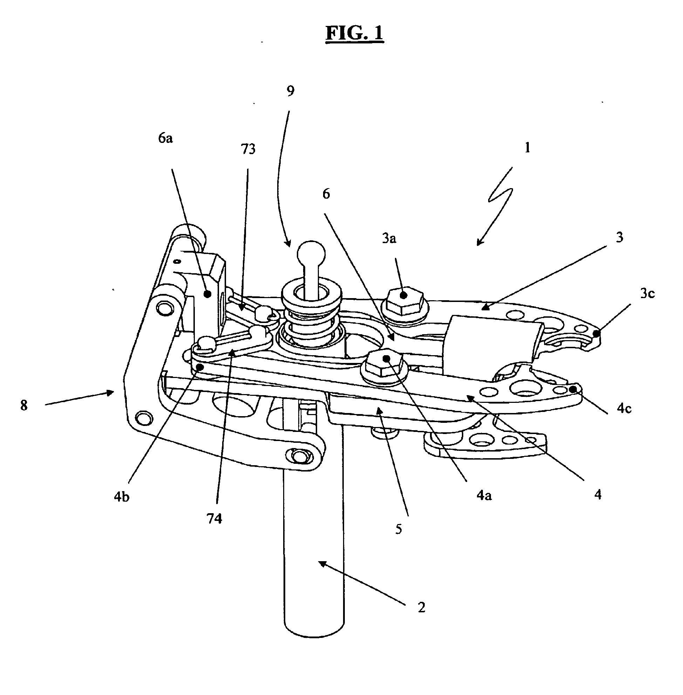

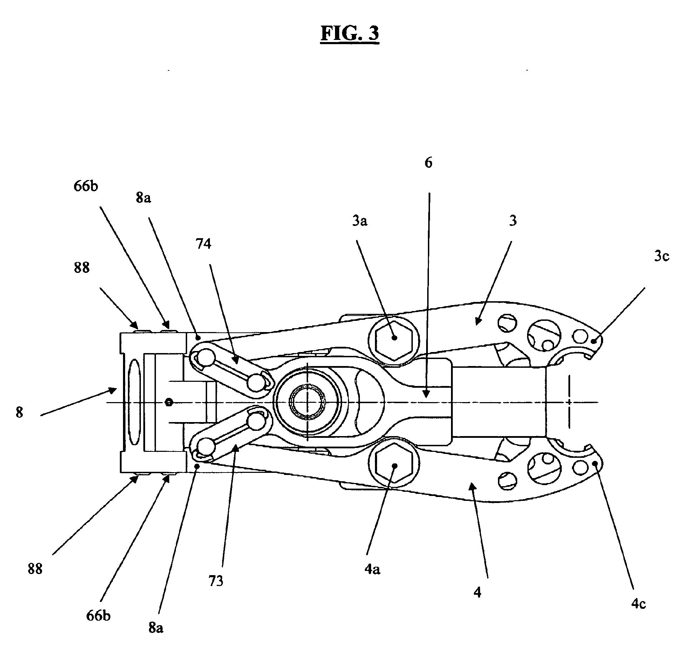

Therefore, the slider 6 drags forwards the rods 73, 74 connected at free ends 3b, 4b of each jaw 3, 4, whereby said free ends approach each, thus rotating the jaws around the respective pivots 3a, 4a. Simultaneously, due to the rotation of the jaws, the operating portions 3c, 4c mutually depart, thus enabling the opening of the gripper, for example for the delivery of a spout (figures 1, 2 and 3).

The gripper remains in the opening position until the vertical force is exerted on the control lever 9.

As soon as the vertical force is removed, the spring force is no more resisted and therefore the spring 10 pushes upwards the piston 7.

Due to the spring force, the piston 7 undergoes an upwards movement inside the bearing shaft 2, thus pulling up the ends 98a of the lower arms 8a.

The upwards movement of the ends 98a of the lower arms 8a produces a counter-rotation of the leverism 8 around the pivots 88, whereby causing a corresponding counter-rotation of the upper arms 8b about the pivots 88 and thus a backwards displacement of the ends 98b of the upper arms 8b.

The ends 98b are coupled to the vertical portion 6a of the slider 6 and for that reason the latter undergoes the same backwards displacement, sliding on the support 5.

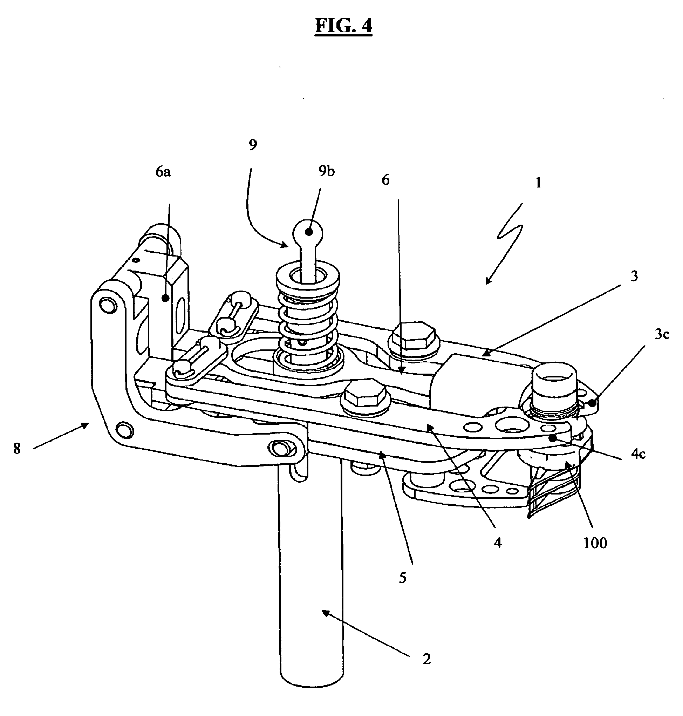

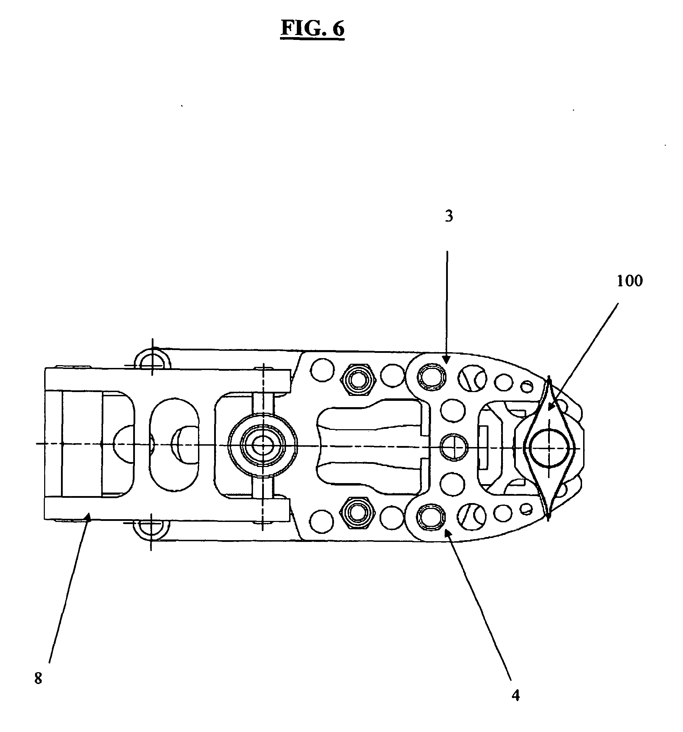

Therefore, the slider 6 drags backwards the rods 73, 74 connected at free ends 3b, 4b of each jaw 3, 4, whereby said free ends depart each, thus counterrotating the jaws around the respective pivots 3a, 4a. Simultaneously, due to the counter-rotation of the jaws, the operating portions 3c, 4c mutually approach, thus enabling the closing of the gripper, for example for the picking up of a spout (figures 4, 5 and 6).

With reference to the figure 7, an apparatus for handling objects is globally indicated by the number 201.

The apparatus 201 comprises at least a handling unit, preferably a plurality of handling units 202, designed so as to be able to pick up spouts from a magazine (not illustrated) and feed them in continuous mode to a processing machine.

In the example illustrated, each handling unit 202 is secured to a lower rotating platform 203 keyed to a main shaft 204.

With reference to the figure 7, each handling unit comprises: a support shaft 205 rotating around a vertical axis and a gripper according to the present invention and above described. In particular, the bearing shaft 2 of each gripper is coaxial with and integrally mounted on the support shaft 205 of the handling unit, whereby the gripper rotates around a vertical axis coaxial with said bearing shaft.

Preferably, the rotation of each gripper around said vertical axis is independent of the rotation of the lower platform and is carried out by means of brushless motors 220 connected to respective support shafts 205.

The apparatus 201 comprises an upper rotating platform 206 provided with a plurality of actuating devices 207 operatively connected to corresponding grippers, preferably to the upper portion 9b of respective control levers 9 of each gripper.

The upper rotating platform is also keyed to the main shaft 204 and therefore it rotates synchronously with the lower rotating platform 203.

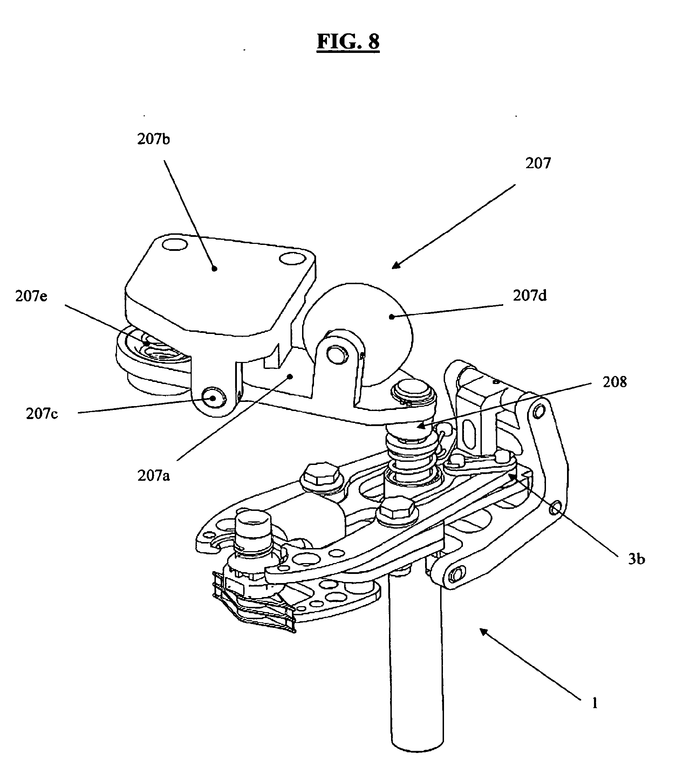

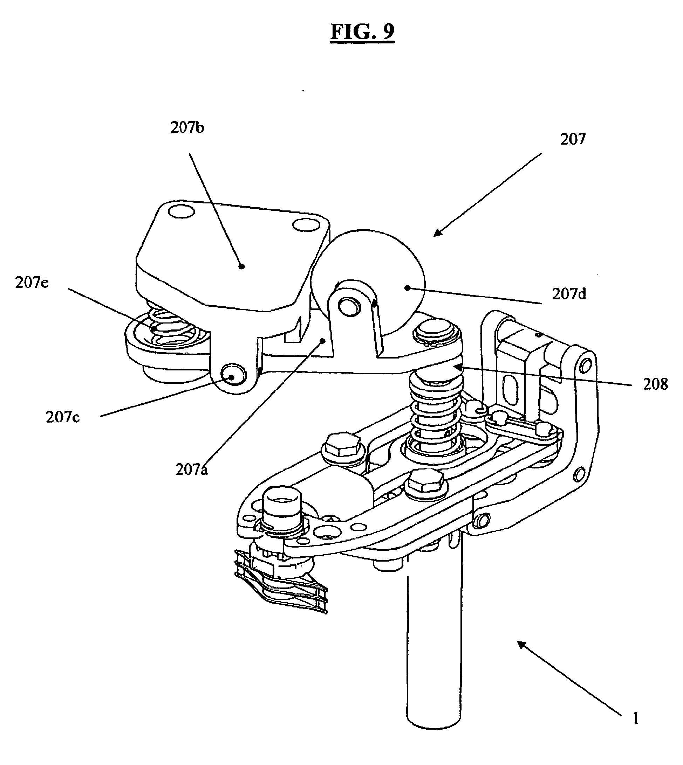

With particular reference to the figures 8 and 9, each actuating device 207 comprises an oscillating sheet 207a, pivotally mounted on an anchor plate 207b through connecting pivots 207c, and a roller 207d, pivotally fixed on said oscillating sheet.

A spring 207e is fixed on the oscillating sheet in an opposite position to said roller with respect to the connecting pivots 207c. In particular, the spring is arranged between the oscillating sheet and the anchor plate.

Preferably, each oscillating sheet 207a is provided with a cup 208 arranged on the inferior surface of the sheet and shaped in such a way as to defining a downwards housing for the upper portion 9b of the control lever 9.

With reference to the figure 7, an upper standstill platform 209 is positioned over the upper rotating platform 206. Such an upper standstill platform is provided with at least a cam 209a designed in such a way as to cooperate with the roller 207d of each actuating device, in correspondence of a definite angular position of the lower rotating platform 203 (and therefore of the upper rotating platform which rotates integrally to said lower platform).

The cam 209a pushes downwards the roller 207d and therefore the oscillating sheet 207a, so that the cup 208 exerts a vertical force on the control lever 9 of each gripper, thus activating the actuating means of each gripper and controlling the opening and closing of the gripper itself.

The figure 8 shows the roller 207d pushed downwards and the gripper in the opening position.

As soon as the roller has passed-by the cam 209a, the spring 207e pulls up the roller, whereby no more force is exerted on the control lever 209 by the cup 208. The figure 9 shows the roller 207d pulled upwards and the gripper in the closing position.

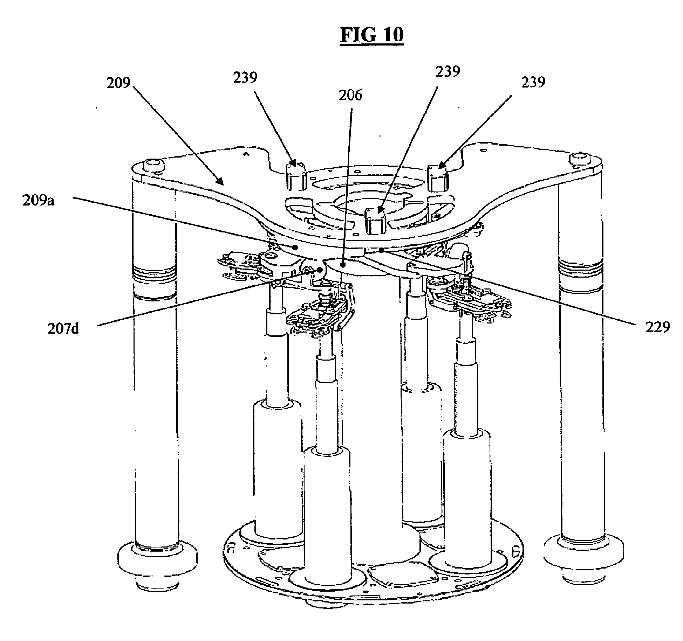

With reference to figure 10, it is shown a further embodiment of an apparatus for handling objects of the type described above and illustrated in figures 7 to 9. In particular, a ring-shaped device 229 is installed on the standstill platform 209 for simultaneously and automatically releasing all the spouts already picked up by the grippers.

The ring-shaped device is movable between a retracted position, wherein said ring-shaped device is far away from the rollers 207d of the actuating devices 207, and an extracted position, wherein said ring-shaped device contacts said rollers. In said extracted position, the ring-shaped device exerts a vertical force on each and every one of the rollers 207d, which therefore simultaneously push downwards the respective control levers 9 of the grippers. The simultaneous movement downwards of the control levers enables the simultaneous opening of the jaws 3, 4 of each gripper.

In the preferred embodiment, the ring-shaped device is activated by a plurality of actuators 239, preferably three cylinders. The actuators 239 are positioned on the standstill platform 209 and are operatively connected to the ring-shaped device 229.

In order to avoid any interference between the cam 209a of the standstill platform and the ring-shaped device 229, the latter is arranged on an inner diameter with respect to said cam.

The transversal dimension of the rollers 207d is preferably larger than the sum of the transversal dimensions of the ring-shaped device and of the cam 209a. Preferably, the transversal dimension of the rollers 207d is substantially twice said sum.

This invention offers some important advantages.

First of all, a gripper in accordance with the present invention is able to assure high accuracy, both during the picking up step and during the delivery step of the spouts. In fact, due to the coaxial arrangement between the piston 7, the bearing shaft 2 and the control lever 9, a gripper according to the invention does not undergo any angular acceleration around the vertical axis of the bearing shaft and therefore no angular velocity or momentum is produced about such a vertical axis, thus overcoming the drawbacks of known grippers.

Another important advantage is that an apparatus according to the invention is able to simultaneously and automatically release all the spouts already picked up, especially in case of a plant holding.

Advantageously, a gripper according to the invention is easy to construct and reliable.

## Claims

1. Gripper (1) for handling objects, comprising:
a bearing shaft (2) having a longitudinal axis;
a support (5) for a pair of jaws (3, 4) connected to the bearing shaft (2), said jaws being movable in mutually departing and approaching mode, in order to enable the opening and closing of the gripper;
driving means for moving said jaws; and
actuating means for activating said driving means,
said actuating means being arranged in a position substantially coaxial to the axis of said bearing shaft (2) and moving along a vertical direction under the exertion of a vertical force coaxial to the axis of said bearing shaft (2),
**characterized in that** said actuating means are cinematically connected to the driving means to activate them along a horizontal direction, whereby the jaws (3, 4) are operated perpendicularly to the direction of appliance of said vertical force.

2. Gripper according claim 1, wherein said actuating means comprise a piston (7) sliding inside said bearing shaft (2) in reciprocating mode between a first operating position, corresponding to the closing of the gripper, and a second operating position, corresponding to the opening of the gripper, said piston being coaxial to the axis of said bearing shaft and being operatively connected to the driving means.

3. Gripper according to claim 2, wherein said driving means comprise a slider (6) movable on said support (5) and cinematically connected to the jaws (3, 4) to make them mutually depart and approach, said slider being reciprocated between a first operating position corresponding to the opening of the gripper (1) and a second operating position corresponding to the closing of the gripper (1).

4. Gripper according to claim 3, wherein said actuating means further comprise a leverism (8) mounted on said support (5) and coupled to the piston (7) and to the slider (6).

5. Gripper according to claim 4, wherein said leverism (8) has at least a lower arm (8a) and at least an upper arm (8b) connected to said lower arm, an end (98a) of the lower arm (8a) being coupled to the piston (7) and an end (98b) of the upper arm (8b) being coupled to the slider (6).

6. Gripper according to claim 3, wherein the jaws (3, 4) are rotatable mounted on said support (5).

7. Gripper according to claim 6, wherein said slider (6) is connected to free ends (3b, 4b) of each jaw, at a definite distance from pivoting points (3a, 4a) and on opposite side with respect to operating portions (3c, 4c) of the gripper (1) suitable for handling objects.

8. Gripper according to claim 2, wherein said piston (7) is provided with a top seat (7a) for housing, at least partially, a control lever (9) for activating the reciprocating motion of said piston.

9. Gripper according to claim 8, wherein said control lever (9) is provided with two expansions, a lower expansion (9a) being housed inside said seat (7a) and an upper expansion (9b) being operatively associable to a roller-cam device.

10. Gripper according to any of the previous claims 8 or 9, wherein the piston is further provided with a collar (7b) surrounding said top seat (7a) and defining a match for a top portion of an elastic element (10) coupled to the piston (7), a match for the lower portion of said elastic element being provided inside said bearing shaft (2).

11. Apparatus for handling objects, comprising a plurality of handling units (202) designed so as to be able to pick up objects from a magazine and feed them to a processing machine, **characterized in that** each handling unit comprise a gripper according to any of the previous claim.

12. Apparatus according to claim 11, further comprising a plurality of actuating devices (207), each of them being operatively connected to the actuating means of a gripper of a corresponding handling unit, for controlling the opening and closing of the gripper itself.

13. Apparatus according to claim 12, further comprising releasing means for simultaneously and automatically releasing objects already picked up by the grippers, said releasing means being movable between a retracted position, wherein they are far away from said actuating devices (207), and an extracted position, wherein they are active on the actuating devices (207) in order to enable the simultaneous opening of the grippers.

14. Apparatus according to claim 12, wherein said handling units (202) are secured to a lower rotating platform (203) keyed to a main shaft (204) and said actuating devices (207) are arranged on an upper rotating platform (206) keyed to said main shaft (204).

## Patentansprüche

1. Greifer (1) zur Handhabung von Objekten, umfassend:
einen Trägerschaft (2), besitzend eine Längsachse;
eine Halterung (5) für ein Paar Spanneinrichtungen (3, 4), verbunden mit dem Trägerschaft (2), wobei die Spanneinrichtungen im gegenseitigen Entfernungs- und
Annäherungsmodus bewegbar sind, um das Öffnen und Schließen des Greifers zu ermöglichen;
Antriebsmittel zum Bewegen der Spanneinrichtungen und Betätigungsmittel zum Aktivieren der Antriebsmittel,
wobei die Betätigungsmittel in einer Position im Wesentlichen koaxial zur Achse des Trägerschafts (2) angeordnet sind und sich entlang einer vertikalen Richtung unter der Ausübung einer vertikalen Kraft koaxial zur Achse des Trägerschafts (2) bewegen,
**dadurch gekennzeichnet, dass** die Betätigungsmittel kinematisch mit den Antriebsmitteln verbunden sind, um diese entlang einer horizontalen Richtung zu aktivieren, wobei die Spanneinrichtungen (3, 4) lotrecht zur Richtung der Anbringung der vertikalen Kraft betrieben werden.

2. Greifer nach Anspruch 1, wobei die Betätigungsmittel einen Kolben (7) umfassen, der im Trägerschaft (2) im hin- und hergehenden Modus zwischen einer ersten Betriebsposition, entsprechend dem Schließen des Greifers, und einer zweiten Betriebsposition, entsprechend dem Öffnen des Greifers, gleiten und der Kolben koaxial zur Achse des Trägerschafts angeordnet und betriebswirksam mit den Antriebsmitteln verbunden ist.

3. Greifer nach Anspruch 2, wobei die Antriebsmittel ein Gleitstück (6) umfassen, bewegbar auf der Halterung (5) und kinematisch verbunden mit den Spanneinrichtungen (3, 4), um dafür zu sorgen, dass diese sich voneinander entfernen und aneinander annähern, wobei das Gleitstück zwischen einer ersten Betriebsposition, entsprechend dem Öffnen des Greifers (1), und einer zweiten Betriebsposition, entsprechend dem Schließen des Greifers (1), hin- und herbewegt wird.

4. Greifer nach Anspruch 3, wobei die Betätigungsmittel zudem ein Hebelsystem (8) umfassen, das auf der Halterung (5) montiert und mit dem Kolben (7) und dem Gleitstück (6) verbunden ist.

5. Greifer nach Anspruch 4, wobei das Hebelsystem (8) mindestens einen unteren Arm (8a) und mindestens einen oberen Arm (8b), verbunden mit dem unteren Arm, besitzt, wobei ein Ende (98a) des unteren Arms (8a) mit dem Kolben (7) und ein Ende (98b) des oberen Arms (8b) mit dem Gleitstück (6) verbunden ist.

6. Greifer nach Anspruch 3, wobei die Spanneinrichtungen (3, 4) drehbar auf der Halterung (5) montiert sind.

7. Greifer nach Anspruch 6, wobei das Gleitstück (6) mit freien Enden (3b, 4b) jeder Spanneinrichtung auf einem vorgegebenen Abstand von Schwenkpunkten (3a, 4a) und an einer entgegengesetzten Seite zu Betriebsabschnitten (3c, 4c) des Greifers (1), geeignet zur Handhabung von Objekten, verbunden ist.

8. Greifer nach Anspruch 2, wobei der Kolben (7) mit einem oberseitigen Sitz (7a) versehen ist, um zumindest teilweise einen Steuerhebel (9) zum Aktivieren der Hin-und Herbewegung des Kolbens aufzunehmen.

9. Greifer nach Anspruch 8, wobei der Steuerhebel (9) mit zwei Erweiterungen, einer unteren Erweiterung (9a), die im Sitz (7a) untergebracht ist, und einer oberen Erweiterung (9b), die betriebswirksam mit einer Kurvenrollenvorrichtung verbunden werden kann, versehen ist.

10. Greifer nach einem der vorhergehenden Ansprüche 8 oder 9, wobei der Kolben zudem mit einem Bund (7b), umgebend den oberseitigen Sitz (7a) und definierend ein Gegenstück für einen oberseitigen Abschnitt eines elastischen Elements (10), gekoppelt mit dem Kolben (7), versehen ist, wobei ein Gegenstück für den unteren Abschnitt des elastischen Elements im Trägerschaft (2) zur Verfügung steht.

11. Vorrichtung zur Handhabung von Objekten, umfassend mehrere Handhabungseinheiten (202), ausgestaltet, um Objekte aus einem Lager aufzunehmen und sie einer Verarbeitungsmaschine zuzuführen, **dadurch gekennzeichnet, dass** jede Handhabungseinheit einen Greifer nach einem der vorhergehenden Ansprüche umfasst.

12. Vorrichtung nach Anspruch 11, zudem umfassend mehrere Betätigungsvorrichtungen (207), von denen jede betriebswirksam mit den Betätigungsmitteln eines Greifers einer entsprechenden Handhabungseinheit verbunden ist, um das Öffnen und Schließen des Greifers zu steuern.

13. Vorrichtung nach Anspruch 12, zudem umfassend Freigabemittel für das gleichzeitige und automatische Freigeben von bereits von den Greifern aufgenommenen Objekten, wobei die Freigabemittel zwischen einer zurückgefahrenen Position, in der sie von den Betätigungsvorrichtungen (207) entfernt sind, und einer ausgefahrenen Position, in der sie auf den Betätigungsmitteln (207) aktiv sind, bewegbar sind, um das gleichzeitige Öffnen der Greifer zu ermöglichen.

14. Vorrichtung nach Anspruch 12, wobei die Handhabungseinheiten (202) an einer unteren Drehplattform (203), verkeilt auf einem Hauptschaft (204), gesichert sind, und die Betätigungsvorrichtungen (207) auf einer oberen Drehplattform (206), verkeilt am Hauptschaft (204), angeordnet sind.

## Revendications

1. Préhenseur (1) pour la manipulation d'objets, comprenant :
un arbre d'appui (2) comportant un axe longitudinal ;
un support (5) destiné à une paire de mâchoires (3, 4) relié à l'arbre d'appui (2), lesdites mâchoires étant mobiles dans un mode de rapprochement et d'éloignement mutuel, afin d'activer l'ouverture et la fermeture du préhenseur ;
des moyens d'entraînement pour déplacer lesdites mâchoires ; et
des moyens d'actionnement pour activer lesdits moyens d'entraînement,
lesdits moyens d'actionnement étant disposés dans une position substantiellement coaxiale par rapport à l'axe dudit arbre d'appui (2) et se déplaçant le long d'une direction verticale sous l'effet d'une force verticale coaxiale par rapport à l'axe dudit arbre d'appui (2),
**caractérisé en ce que** lesdits moyens d'actionnement sont reliés aux moyens d'entraînement de façon cinématique afin de les activer le long d'une direction horizontale, où les mâchoires (3, 4) sont actionnées perpendiculairement à la direction d'application de ladite force verticale.

2. Préhenseur selon la revendication 1, dans lequel lesdits moyens d'actionnement comprennent un piston (7) coulissant à l'intérieur dudit arbre d'appui (2) dans un mode de mouvement de va-et-vient entre une première position de fonctionnement, correspondant à la fermeture du préhenseur, et une seconde position de fonctionnement, correspondant à l'ouverture du préhenseur, ledit piston étant coaxial par rapport à l'axe dudit arbre d'appui et étant opérationnellement relié aux moyens d'entraînement.

3. Préhenseur selon la revendication 2, dans lequel lesdits moyens d'entrainement comprennent un coulisseau (6) mobile sur ledit support (5) et relié de manière cinématique aux mâchoires (3, 4) pour faire en sorte de les éloigner et de les rapprocher mutuellement, ledit coulisseau étant animé d'un mouvement de va-et-vient entre une première position de fonctionnement correspondant à l'ouverture du préhenseur (1) et une seconde position de fonctionnement correspondant à la fermeture du préhenseur (1).

4. Préhenseur selon la revendication 3, dans lequel lesdits moyens d'actionnement comprennent de plus un mécanisme à levier (8) monté sur ledit support (5) et accouplé au piston (7) et au coulisseau (6).

5. Préhenseur selon la revendication 4, dans lequel ledit mécanisme de levier (8) comporte au moins un bras inférieur (8a) et au moins un bras supérieur (8b) relié au dit bras inférieur, une extrémité (98a) du bras inférieur (8a) étant accouplée au piston (7) et une extrémité (98b) du bras supérieur (8b) étant accouplée au coulisseau (6).

6. Préhenseur selon la revendication 3, dans lequel les mâchoires (3, 4) sont montées en rotation sur ledit support (5).

7. Préhenseur selon la revendication 6, dans lequel ledit coulisseau (6) est relié à des extrémités libres (3b, 4b) de chaque mâchoire, à une distance précise des points pivotants (3a, 4a) et sur un côté opposé par rapport aux parties opérationnelles (3c, 4c) du préhenseur (1) apte à la manipulation d'objets.

8. Préhenseur selon la revendication 2, dans lequel ledit piston (7) est pourvu d'un logement supérieur (7a) pour loger, au moins partiellement, un levier de commande (9) pour activer le mouvement de va-et-vient dudit piston.

9. Préhenseur selon la revendication 8, dans lequel ledit levier de commande (9) est pourvu de deux extensions, une extension inférieure (9a) étant logée à l'intérieur dudit logement (7a) et une extension supérieure (9b) étant opérationnellement associable à un mécanisme excentrique à cylindre.

10. Préhenseur selon l'une quelconque des revendications précédentes 8 ou 9, dans lequel le piston est aussi pourvu d'une bague (7b) entourant ledit logement supérieur (7a) et définissant une correspondance pour une partie supérieure d'un élément élastique (10) accouplé au piston (7), une correspondance pour la partie inférieure dudit élément élastique étant prévue à l'intérieur dudit arbre d'appui (2).

11. Appareil pour la manipulation d'objets, comprenant une pluralité d'unités de manipulation (202) conçues de sorte à être capables de prendre des objets d'un magasin pour alimenter une machine de traitement, **caractérisé en ce que** chaque unité de manipulation comprend un préhenseur selon l'une quelconque des revendications précédentes.

12. Appareil selon la revendication 11, comprenant de plus une pluralité de dispositifs d'actionnement (207), chacun d'entre eux étant opérationnellement relié aux moyens d'actionnement d'un préhenseur de l'unité de manipulation correspondante, afin de commander l'ouverture et la fermeture du préhenseur lui-même.

13. Appareil selon la revendication 12, comprenant de plus des moyens de dépose pour simultanément et automatiquement déposer les objets déjà prélevés par les préhenseurs, lesdits moyens de dépose étant mobiles entre une position rétractée, dans laquelle ils sont éloignés desdits dispositifs d'actionnement (207), et une position d'extraction, dans laquelle ils sont opérationnels sur les dispositifs d'actionnement (207) afin d'activer l'ouverture simultanée des préhenseurs.

14. Appareil selon la revendication 12, dans lequel lesdites unités de manipulation (202) sont attachées à une plateforme tournante inférieure (203) calée sur un arbre principal (204) et lesdits dispositifs d'actionnement (207) sont disposés sur une plateforme tournante supérieure (206) calée sur ledit arbre principal (204).
